# EUROPÄISCHE PATENTANMELDUNG

(11) **EP 0 955 521 A2**
(43) Veröffentlichungstag der Anmeldung: **10.11.1999**
(21) Anmeldenummer: 99250094.2
(22) Anmeldetag: 26.03.1999
(51) Int. Cl.: G01C 21/20

(54) **Routeninformationsübermittlungsverfahren**

(30) Priorität: 08.04.1998 DE 19816585
(71) Anmelder: MANNESMANN Aktiengesellschaft, 40213 Düsseldorf (DE)
(72) Erfinder: Parra Asensio, Andreas, Dr. Dipl.-Math., 40667 Meerbusch (DE); Kraus, Roland, Dr. Dipl.-Phys., 40822 Mettmann (DE); Meis, Josef, Dipl.-Math., 48147 Münster (DE); Stangier, Peter, Dr. Inf., 50389 Wesseling (DE)
(74) Vertreter: Meissner, Peter E., Dipl.-Ing.

(57) **Zusammenfassung**

Eine effiziente Information von Endgeräten über eine von einer Zentrale dem Endgerät empfohlende Route durch ein zumindest Autobahnen und Landstraßen umfassendes Überlandnetz eines Verkehrsnetzes wird ermöglicht durch ein Endgerät, eine Zentrale und ein Verfahren zur Routeninformation eines Benutzers eines Endgerätes durch Übermittlung von Routeninformationen von einer Zentrale an das Endgerät,
wobei in der Zentrale (10) eine Empfehlung für eine Route (7, 2, 3, 4, 5, 6) durch ein Verkehrsnetz (A8, A81, A7, B17, B300) von einem Anfangspunkt (Singen) zu einem Zielpunkt (München) für das Endgerät erstellt wird,
wobei zu übermittelnde Routenpunkte (7, 2, 6) auf dieser Route nur dort definiert werden, wo
- das Endgerät in das Überlandnetz (A81) eintreten soll (Routenpunkt 7) oder
- das Endgerät (9) eine Kreuzung oder Abzweigung des Überlandnetzes befahren soll, an welche der Straßenname (A81, A8) entlang der vom Endgerät (9) zu befahrenden Route wechselt (Routenpunkt 2), oder
- das Endgerät (9) das Überlandnetz verlassen soll (Routenpunkt 6),
wobei von der Zentrale (10) an das Endgerät (9) diese Routenpunkte (7,2,6) repräsentierende Routendaten übermittelt werden,
wobei im Endgerät (9) aufgrund der in den Routendaten repräsentierten Routenpunkte (7,2,6) und aufgrund einer endgerätseitigen Tabelle von möglichen Routenpunkten (1 bis 8) und Straßen die Route (7, A81, 2, A8, 3, 4, 5, 6) rekonstruiert wird und
wobei das Endgerät (9) Routenhinweise zur rekonstruierten Route für den Endgerätbenutzer erstellt und ausgibt.

## Beschreibung

Die Erfindung betrifft ein Verfahren zur Routeninformation eines Endgerät-Benutzers durch Übermittlung von Routeninformationen von einer Zentrale an das Endgerät sowie Vorrichtungen zur Durchführung des Verfahrens.

Aus der Anmeldung DE 197 50 777.8 derselben Anmelderin ist ein Verfahren zur Routeninformation eines Endgerät-Benutzers unter Übermittlung von Routeninformationen von einer Zentrale an das Endgerät bekannt. Dieses Verfahren ermöglicht eine effiziente Ortsreferenzierung in entlegenen Gebieten, zu welchen im Endgerät keine detaillierte Karte und/oder keine Referenztabelle mit Codezeichnungen und ihnen zugeordneten Orten im Verkehrsnetz existiert. Zur Übertragung einer empfohlenen Route von der Zentrale an das Endgerät werden nur Informationen zu Wegpunkten am Ort des empfohlenen Abbiegens des Fahrzeugs mit dem Endgerät von einer Straße übermittelt, welche die Bezeichnung der jeweils in Fahrtrichtung der Route einem Wegpunkt folgenden Straße, den Ort des Wegpunktes und die Fahrtrichtung nach dem Wegpunkt umfassen. Dieses Verfahren ist zur Routeninformation in abgelegenen Gebieten geeignet, jedoch zur Routeninformation auf Autobahnen und Landstraßen eines Überlandnetzes eines Verkehrsnetzes zu aufwendig.

Hiervon ausgehend ist die Aufgabe der vorliegenden Erfindung die Schaffung eines effizienten und kostengünstigen Verfahrens zur Übermittlung von Routeninformationen zu über ein Überlandnetz eines Verkehrsnetzes führenden Routen von einer Zentrale an ein mobiles Endgerät. Die Aufgabe wird durch die Gegenstände der unabhängigen Ansprüche gelöst.

Das erfindungsgemäße Verfahren ermöglicht mit einfachen Endgeräten eine effiziente Verkehrsinformation eines Endgerät-Nutzers im Überlandnetz, welches zweckmäßig lediglich Autobahnen und Landstraßen umfaßt. Die Verwendung von endgerätseitig und zentralseitig identischen Tabellen zu zur Definition einer Route verwendbaren möglichen Routenpunkten und deren Lage oder/und sie berührenden Straßen ermöglicht durch Referenzierung der Tabelle eine effiziente Übertragung der Routenpunkte, wobei eine endgerätseitige Rekonstruktion der Route sowohl vollständige Routenhinweise für einen Endgerätbenutzer wie auch die Zuordnung von Verkehrsinformationen zu auf der Route zwischen übermittelten Routenpunkten liegenden Orten im Endgerät für die Benutzerinformation erlaubt. Dadurch, daß die zu übermittelnden Routeninformationen Routenpunkte umfassen, an welchen eine Kreuzung oder Abzweigung des Überlandnetzes derart befahren werden soll, daß der Straßenname auf der vom Endgerät zu befahrenden Route dort wechselt, ist die zu übertragene Datenmenge gering; Kreuzungen und Abzweigungen des Überlandnetzes können dabei insbesondere Kreuzungen oder Abzweigungen sein, an welchen sich Autobahnen kreuzen, Autobahnen mit Landstraßen kreuzen, Landstraßen kreuzen, Autobahnabfahrten befinden etc. Außer an Kreuzungen und Abzweigungen wird ein zu übermittelnder Routenpunkt dort definiert, wo das Endgerät in das Überlandnetz eintreten soll oder das Überlandnetz verlassen soll.

Besonders vorteilhafte Ausgestaltungen der Erfindung ergeben sich aus den Unteransprüchen. Statt oder neben zu übermittelnden Routenpunkten können auch Zusatzinformationen übermittelt werden. Insbesondere können auf Routenpunkte bezogene Verkehrsinformationen, Verkehrsprognosen etc. übermittelt werden. Verkehrsinformationen und Verkehrsprognosen können sich auch auf entlang einer Route zwischen übermittelten Routenpunkten befindende mögliche Routenpunkte beziehen, da das Endgerät die vollständige Route aufgrund der übermittelten Routenpunkte rekonstruiert und somit Verkehrsinformationen und Verkehrsprognosen etc. zwischen Routenpunkten den richtigen Straßenabschnitten zuordnen kann.

Zur Rekonstruktion und Darstellung der Route im Endgerät ist eine endgerätseitige digitale Karte vorteilhaft.

Die Rekonstruktion der Route erfolgt zweckmäßig aufgrund im Endgerät zu möglichen Routenpunkten (= Verkehrsnetz-Knoten) abgelegten, die möglichen Routenpunkte berührenden Straßenabschnitten (= Verkehrsnetz-Kanten). Aufgrund der die rekonstruierte Route bildenden Straßenabschnitte und im Endgerät in einer Tabelle zu Straßenabschnitten jeweils gespeicherten Straßennamen kann eine geeignete Endgerät-Benutzer-lnformation zur Route ausgegeben werden.

Im Endgerät in einer Tabelle gespeicherte mögliche Routenpunkte, also Verkehrsnetz-Knoten sind zweckmäßig nur dort definiert, wo sich Abzweigungen oder Kreuzungen von Straßenabschnitten des Überlandnetzes befinden oder das Überlandnetz endet.

Das Endgerät ist insbesondere ein mobiles Endgerät, welches beispielsweise in ein Fahrzeug eingebaut sein kann.

Die Übermittlung der Routeninformationen kann effizient per Funk, insbesondere Mobilfunk, beispielsweise als Mobilfunk-Kurznachricht, erfolgen.

Das erfindungsgemäße Verfahren ist endgerätseitig und zentralseitig insbesondere als Programm implementierbar.

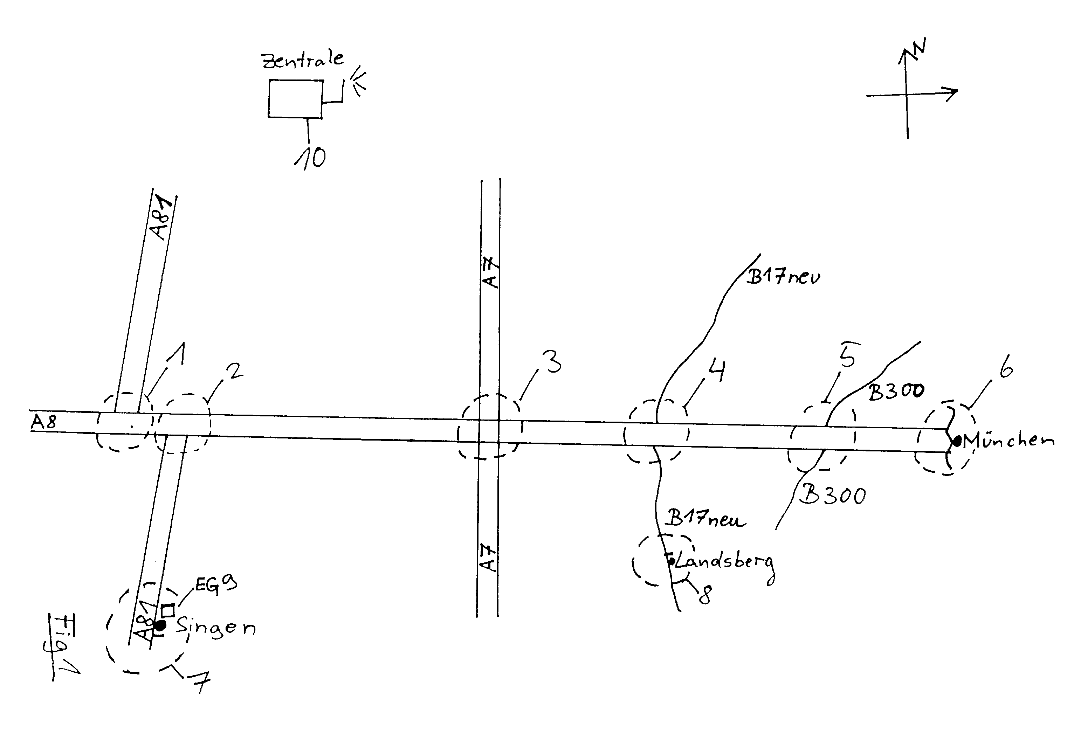

Weitere Merkmale und Vorteile der Erfindung ergeben sich aus den weiteren Unteransprüchen und der nachfolgenden Beschreibung eines Ausführungsbeispiels anhand der Zeichnung. Dabei zeigt
- Fig. 1: einen Ausschnitt aus einem Überlandnetz zur Verdeutlichung des Verfahrens anhand von beispielhaften Routen.

Figur 1 zeigt einen Ausschnitt eines Überlandnetzes. Das Überlandnetz kann insbesondere Autobahnen und Landstraßen umfassen. Es kann alternativ beispielsweise auch nur Autobahnen umfassen.

Im vorliegenden Beispiel sind nur einige der in der dargestellten Region befindlichen Landstraßen dargestellt, die für die nachfolgenden Routen-Beispiele relevant sind. In Figur 1 oben ist Norden. Von links nach rechts, also von Westen nach Osten erstreckt sich die Autobahn A8. Von Süden nach Norden verlaufen die Autobahn A7, die Autobahnabschnitte A81 und näherungsweise die Bundesstraßen B17/neu und B300. Die Orte, an welchen sich Autobahnen, Autbahnabschnitte, Landstraßen oder Landstraßenabschnitte berühren, also Abzweigungen und Kreuzungen des Überlandnetzes, sind mit gestrichelten Kreisen markiert und stellen zur Definition einer Route geeignete "mögliche Routenpunkte" dar. Im zu Übersichtszwecken hinsichtlich der Landstraßen unvollständigen dargestellten Kartenausschnitt in Figur 1 sind dies die Routenpunkte 1, 2, 3, 4, 5, 6, 7 8. Die möglichen Routenpunkte 1, 2 sind Abzweigungen von Abschnitten der Autobahn A81 von der Autobahn A8. Der mögliche Routenpunkt 3 ist eine Kreuzung der Autobahnen A7 und A8. Die möglichen Routenpunkte 4 und 5 sind Kreuzungen der Autobahn A8 mit den Landstraßen B17/neu bzw. B300. Der Routenpunkt 6 ist ein Ende des Überlandnetzes in Form des Autobahnendes der A8 am Beginn des Stadtnetzes der Stadt München.

An den Punkten 7, 8 befinden sich weitere mögliche Routenpunkte, an welchen das Überlandnetz betreten werden kann, wobei im Punkt 7 die A81 an der Ausfahrt an der Stadt Singen vom Stadtnetz aus befahren werden kann, während am Punkt 8 das Überlandnetz in Form der B17/neu vom Stadtnetz der Stadt Landsberg aus betreten werden kann.

In der Zentrale soll für ein Endgerät eine optimale Route ermittelt und möglichst effizient und dabei eindeutig dem Endgerät übermittelt werden. Ferner soll im Laufe des Befahrens der Route das Endgerät Verkehrsinformationen, welche die Zentrale (beispielsweise an alle Endgerät-Teilnehmer in einem Gebiet über einen Kurznachrichtenkanal) aussendet hinsichtlich Relevanz der vom Endgerät zu verfolgenden Route auswählen und ggf. dem Endgerätbenutzer darstellen können.

Zur effizienten Übermittlung einer in der Zentrale erarbeiteten Route übermittelt die Zentrale an das Endgerät lediglich Routenpunkte auf der Route, an welchen das Endgerät in das Überlandnetz eintreten soll oder an welchen Routenpunkten das Endgerät eine Kreuzung oder Abzweigung des Überlandnetzes befahren soll, an welcher der Straßenname entlang der vom Endgerät zu befahrenden Route wechselt oder an welchen Routenpunkten das Endgerät das Überlandnetz verlassen soll.

Für eine derartige effiziente Übertragung weisen das Endgerät 9 und die Zentrale 10 zumindest teilweise übereinstimmende Tabellen von möglichen Routenpunkten 1 - 8 auf, von welchen jeweils für eine Route lediglich die zur Definition einer Route wie oben ausgeführt erforderlichen Routenpunkte übermittelt werden, worauf im Endgerät aufgrund der übermittelten Routenpunkte und der endgerätseitigen Tabellen von möglichen Routenpunkten und die Routenpunkte berührenden Straßen die Route rekonstruiert wird und Routenhinweise zur rekonstruierten Route für den Endgerätbenutzer erstellt und ausgegeben werden. Routenhinweise an den Endgerätbenutzer können beispielsweise sein: "ln Singen auf die A81, A81 bis zur A8, A8 weiter bis München" etc.

Das Verfahren wird nun anhand eines ersten Beispiels erklärt, in welchem einem Benutzer eines Endgerätes 9, der sich in Figur 1 in der Stadt Singen befindet, eine Route nach Landsberg erstellt und übermittelt wird. Hierzu werden dem Benutzer des Endgerätes 9 lediglich Informationen von der Zentrale zu denjenigen Routenpunkten übermittelt, an welchen der Endgerätbenutzer mit seinem Fahrzeug in das (hier Autobahnen und Landstraßen umfassende) Überlandnetz einfahren soll oder an welchen das Endgerät eine Kreuzung des Überlandnetzes befahren soll und dabei der Straßenname der vom Endgerät nach der Kreuzung zu befahrenden Route wechselt oder an welchen das Endgerät das Überlandnetz verlassen soll.

Bei der Fahrt von Singen nach Landsberg in Figur 1 ist der erste Routenpunkt der durch einen gestrichelten Kreis dargestellte Punkt 7, da hier das Fahrzeug mit dem Endgerät 9 in das Überlandnetz, nämlich auf die Autobahn A81 einfahren soll. Der nächste in der Zentrale gesetzte Routenpunkt zur Route ist der Routenpunkt Nr. 2, da hier eine Abzweigung der A81 von der A8 vorliegt und der Straßenname auf der vom Endgerät zu befahrenden Route wechselt, nämlich von A81 auf A8. Der nächste zu übermittelnde Routenpunkt ist der Routenpunkt 4, da am Routenpunkt 3 sich der Straßenname entlang der vom Endgerätbenutzer zu befahrenden Route nicht ändert. Der Routenpunkt 4 soll jedoch übermittelt werden, da sich dort eine Abzweigung befindet (von der A8 auf die B17/neu) und sich dabei entlang der vom Endgerät zu befahrenden Route der Straßenname ändert von A8 auf B17/neu. Der nächste Routenpunkt ist hier der Routenpunkt 8, da hier das Fahrzeug mit dem Endgerät das Überlandnetz an der Stadt Landsberg, also am Ziel verlassen soll. Die zu übertragenden Routenpunkte sind also hier die Punkte 7, 2, 4, 8.

Im folgenden wird als weiteres Beispiel eine Route von Singen nach München anhand von Figur 1 erläutert. Der erste zu übermittelnde Routenpunkt ist der Routenpunkt 7, wo das Fahrzeug mit dem Endgerät 9 in das Überlandnetz auf die A81 einfahren soll. Der nächste Routenpunkt ist der Routenpunkt 2, an welchem das Endgerät über eine Abzweigung auf eine Straße A8 mit anderem Namen fahren soll. Der nächste Routenpunkt ist der Routenpunkt 6, da sich an den Routenpunkten 3, 4, 5 der Name der auf der Route zu befahrenden Straße A8 nicht ändert. Der Routenpunkt 6 ist zu übermitteln, weil hier das Fahrzeug mit dem Endgerät das Überlandnetz (hier bestehend aus Autobahnen und Landstraßen) am Anfang des Münchener Stadtnetzes verlassen soll.

Aufgrund der übermittelten Routenpunkte 7, 2, 6 rekonstruiert das Endgerät die zu befahrende Route und gibt geeignete Routenhinweise an den Endgerätbenutzer aus, z.B. "in Singen auf die A81 Richtung Stuttgart, vor Stuttgart Wechsel auf die A8, A8 weiter Richtung München bis München" etc.

Die Übermittlung der zu übermittelnde Routenpunkte betreffenden Routendaten von der Zentrale an das Endgerät kann per Funk, z.B. Mobilfunk, erfolgen. Insbesondere ist eine Mobilfunk-Kurznachricht, wie GSM-SMS etc., geeignet.

Nachdem das Endgerät aufgrund der übermittelten Routenpunkte die Route detailliert rekonstruiert und einer im Endgerät befindlichen digitalen Karte zugeordnet hat, kann das Endgerät entlang der Route empfangene Verkehrsinformationen, Verkehrsprognosen etc. der Zentrale 10 daraufhin überprüfen, ob sie für die zu verfolgende Route relevant sind. Wenn sich das Endgerät beispielsweise zwischen den Routenpunkten 4 und 5 befindet (welche mit der Route nicht übermittelt wurden), kann das Endgerät eine Information über einen Stau von zwei Stunden Dauer aufgrund eines Unfalles direkt vor der Anschlußstelle München (also vor dem Routenpunkt 6) dahingehend auswerten, daß ein Umfahren über die B300 in Erwägung zu ziehen und evtl. dem Endgerätbenutzer vorzuschlagen ist.

## Patentansprüche

1. Verfahren zur Routeninformation eines Benutzers eines Endgerätes durch Übermittlung von Routeninformationen von einer Zentrale an das Endgerät, wobei in der Zentrale (10) eine Empfehlung für eine Route (7, 2, 3, 4, 5, 6) durch ein Verkehrsnetz (A8, A81, A7, B17, B300) von einem Anfangspunkt (Singen) zu einem Zielpunkt (München) für das Endgerät erstellt wird,
wobei zu übermittelnde Routenpunkte (7, 2, 6) auf dieser Route nur dort definiert werden, wo
- das Endgerät in das Überlandnetz (A81) eintreten soll (Routenpunkt 7) oder
- das Endgerät (9) eine Kreuzung oder Abzweigung des Überlandnetzes befahren soll, an welcher der Straßenname (A81, A8) entlang der vom Endgerät (9) zu befahrenden Route wechselt (Routenpunkt 2), oder
- das Endgerät (9) das Überlandnetz verlassen soll (Routenpunkt 6),
wobei von der Zentrale (10) an das Endgerät (9) diese Routenpunkte (7,2,6) repräsentierende Routendaten übermittelt werden,
wobei im Endgerät (9) aufgrund der in den Routendaten repräsentierten Routenpunkte (7,2,6) und aufgrund einer endgerätseitigen Tabelle von möglichen Routenpunkten (1 bis 8) und Straßen die Route (7, A81, 2, A8, 3, 4, 5, 6) rekonstruiert wird und
wobei das Endgerät (9) Routenhinweise zur rekonstruierten Route für den Endgerätbenutzer erstellt und ausgibt.

2. Verfahren nach Anspruch 1,
dadurch gekennzeichnet,
daß die Zentrale und das Endgerät eine Tabelle mit Straßennamen (A8; A81; B300; B17) und möglichen Routenpunkten (1, 2, 3, 4, 5, 6; 2, 7; 5; 4,8) auf durch diese Straßennamen bezeichneten Straßen und/oder eine Tabelle mit möglichen Routenpunkten (1;2;3;4;5;6;7;8) und die möglichen Routenpunkte berührenden Straßen (A8, A81; A8, A81; A7, A8; A8, B17; A8, B300; A8; A81;B17) aufweisen.

3. Verfahren nach einem der vorhergehenden Ansprüche,
dadurch gekennzeichnet,
daß das Endgerät (9) empfangene auf mögliche Routenpunkte (1 - 8) bezogene Verkehrsinformationen hinsichtlich ihrer Relevanz zur vom Endgerät zu verfolgenden, endgerätseitig rekonstruierten Route (7, 2, 3, 4, 8) überprüft und in Abhängigkeit von der Überprüfung dem Endgerätbenutzer darstellt.

4. Verfahren nach einem der vorhergehenden Ansprüche,
dadurch gekennzeichnet,
daß zu zu übermittelnden Routenpunkten Zusatzinformationen, insbesondere Bezeichnung des Routenpunktes (Autobahnkreuz A8/A81) und/oder
Straßennamen und/oder Straßennummern ("A8") am Routenpunkt übermittelt werden.

5. Verfahren nach einem der vorhergehenden Ansprüche,
dadurch gekennzeichnet,
daß das Endgerät eine digitale Karte zumindest des zwischen Städten durch zumindest Autobahnen und Landstraßen gebildeten Überlandnetzes des
Verkehrsnetzes aufweist und die rekonstruierte Route auch Straßen der digitalen Karte zugeordnet ist.

6. Verfahren nach einem der vorhergehenden Ansprüche,
dadurch gekennzeichnet,
daß im Endgerät und in der Zentrale eine teilweise oder vollständig übereinstimmende Tabelle mit möglichen Routenpunkten (1 bis 8) des
Überlandnetzes und mit Angaben zu die Routenpunkte berührenden Straßen vorliegt.

7. Verfahren nach einem der vorhergehenden Ansprüche,
dadurch gekennzeichnet,
daß die Routenpunkte in einer ihre geographische Position (10°22'33"N;
66°55'44"W) repräsentierenden Darstellung (102233665544) endgerätseitig und zentralseitig in einer Tabelle gespeichert sind und in dieser Darstellung übermittelt werden.

8. Verfahren nach einem der vorhergehenden Ansprüche,
dadurch gekennzeichnet,
daß die Routenpunkte in einer ihre geographische Position (10°22'23"N;
66°55'44"W) repräsentierenden Darstellung (102233665544) zusammen mit mindestens einem Richtungshinweis zu einer empfohlenen Route von der Zentrale an das Endgerät übermittelt werden.

9. Verfahren nach einem der vorhergehenden Ansprüche,
dadurch gekennzeichnet,
daß das Endgerät eine Tabelle von möglichen Routenpunkten und von diese verbindenden Straßensegmenten einer digitalen Karte im Endgerät aufweist.

10. Verfahren nach einem der vorhergehenden Ansprüche,
dadurch gekennzeichnet,
daß mögliche Routenpunkte in den Tabellen im Endgerät und/oder in der Zentrale nur dort definiert sind, wo
- sich drei zusammen eine Abzweigung bildende Straßenabschnitte des Überlandnetzes kreuzen oder
- sich mindestens vier zusammen eine Kreuzung bildende Straßenabschnitte des Überlandnetzes kreuzen oder
- das Autobahnen und Landstraßen umfassende Überlandnetz endet oder
- sich mindestens drei zusammen eine Abzweigung oder Kreuzung bildende Straßenabschnitte kreuzen, von denen mindestens eine zum Überlandnetz gehört und mindestens eine nicht zum Überlandnetz gehört.

11. Verfahren nach einem der vorhergehenden Ansprüche,
dadurch gekennzeichnet,
daß das Endgerät aufgrund übermittelter Routenpunkte die Route rekonstruiert in Form von die Route bildenden Straßenabschnitten einer digitalen Karte im Endgerät.

12. Verfahren nach einem der vorhergehenden Ansprüche,
dadurch gekennzeichnet,
daß das Endgerät mobil ist, insbesondere in einem Fahrzeug eingebaut ist.

13. Verfahren nach einem der vorhergehenden Ansprüche,
dadurch gekennzeichnet,
daß die Übermittlung von der Zentrale an das Endgerät per Funk, insbesondere Mobilfunk, erfolgt.

14. Verfahren nach Anspruch 13,
dadurch gekennzeichnet,
daß die Übertragung per Mobilfunk-Kurznachricht, insbesondere GSM-SMS erfolgt.

15. Endgerät zur Durchführung des Verfahrens nach einem der vorhergehenden Ansprüche.

16. Endgerät nach Anspruch 15,
dadurch gekennzeichnet,
daß es
- einen Speicher für ein Programm zur Durchführung des Verfahrens nach einem der Ansprüche 1 bis 14,
- einen Speicher für eine Tabelle von möglichen Routenpunkten (1 bis 8) sowie von die Routenpunkte berührenden Straßen und/oder eine Tabelle von Straßen und auf den Straßen liegenden Routenpunkten
- eine Funkeinrichtung,
- eine Ausgabeeinrichtung zum Ausgeben von Routenhinweisen an den Endgerätbenutzer
aufweist.

17. Zentrale zur Durchführung des Verfahrens nach einem der Ansprüche 1 bis 13.

18. Zentrale nach Anspruch 17,
dadurch gekennzeichnet,
daß sie
- mit einem Speicher für ein Programm zur Durchführung des Verfahrens nach einem der Ansprüche 1 bis 14,
- mit einem Speicher mit einer Tabelle von möglichen Routenpunkten sowie von die Routenpunkte berührenden Straßen und/oder eine Tabelle von Straßen und auf den Straßen liegenden Routenpunkten
- mit einer Funkeinrichtung
versehen ist.

19. Zentrale nach Anspruch 17 oder 18,
dadurch gekennzeichnet,
daß sie eine Einrichtung zum Erstellen und Übermitteln von Verkehrsinformationen für Endgeräte aufweist.

20. Zentrale nach einem der Ansprüche 17 bis 19,
dadurch gekennzeichnet,
daß sie Routenpunkte in einer eine endgerätseitige digitale Kante des Verkehrsnetzes referenzierenden Form übermittelt.

21. Zentrale nach einem der Ansprüche 17 bis 19,
dadurch gekennzeichnet,
daß sie Routenpunkte in einer die geographische Position von Routenpunkten repräsentierenden Form übermittelt.

22. Zentrale nach einem der Ansprüche 17 bis 21,
dadurch gekennzeichnet,
daß sie als Funkeinrichtung eine Mobilfunkeinrichtung aufweist.

23. Zentrale nach Anspurch 22,
dadurch gekennzeichnet,
daß die Mobilfunkeinrichtung eine Kurznachrichten-Übermittlungseinrichtung für zu übermittelnde Routenpunkte aufweist.
